# EUROPÄISCHE PATENTSCHRIFT

(11) **EP 1 749 156 B1**
(45) Veröffentlichungstag und Bekanntmachung des Hinweises auf die Patenterteilung: **29.09.2010**
(21) Anmeldenummer: 04745161.2
(22) Anmeldetag: 27.05.2004
(51) Int. Cl.: F16H 3/66, B62M 11/16

(54) **EPYZYKLISCHES RÄDERGETRIEBE ZUR ÄNDERUNG DER WINKELGESCHWINDIGKEIT ZWISCHEN ZWEI WELLEN SOWIE FAHRRAD, VERSEHEN MIT EINEM SOLCHEN EPYZYKLISCHEN RÄDERGETRIEBE**
EPICYCLIC TRANSMISSION FOR MODIFYING AN ANGULAR SPEED BETWEEN TWO SHAFTS AND A BICYCLE PROVIDED WITH SAID EPICYCLIC TRANSMISSION
TRAIN D'ENGRENAGES EPICYCLOIDAL PERMETTANT DE FAIRE VARIER LA VITESSE ANGULAIRE ENTRE DEUX ARBRES, ET BICYCLETTE EQUIPEE D'UN TEL TRAIN D'ENGRENAGES EPICYCLOIDAL

(43) Veröffentlichungstag der Anmeldung: 07.02.2007
(73) Patentinhaber: Nardelli, Paolo, 38100 Trento (IT)
(72) Erfinder: Nardelli, Paolo, 38100 Trento (IT)
(74) Vertreter: Lissandrini, Marco
(86) Internationale Anmeldenummer: PCT/IT2004/000314
(87) Internationale Veröffentlichungsnummer: WO 2005/116483

(56) Entgegenhaltungen:
- DE-A1- 19 824 745
- FR-A- 1 017 246
- SU-A1- 1 216 035
- PATENT ABSTRACTS OF JAPAN Bd. 2000, Nr. 14, 5. März 2001 (2001-03-05) & JP 2000 316914 A (YAMAMOTO YASUYUKI), 21. November 2000 (2000-11-21)

## Beschreibung

Unter einem epizyklischen Rädergetriebe ist eine mechanische Vorrichtung zu verstehen, zur Übertragung der Leistung zwischen zwei Wellen, von denen eine die Antriebswelle und die andere die Abtriebwelle ist, derart dass die antriebsseitig von der Antriebswelle übertragene Winkelgeschwindigkeit von jener die abtriebsseitig der Abtriebswelle übertragen wird, verschieden ist.

Epizyklische Rädergetriebe kennzeichnen sich durch die Anwesenheit von Zahnrädern. Im allgemeinen sind epizyklische Rädergetriebe komplex, insbesondere was die Mechanismen betrifft, die die Bewegung von einem Zahnrad auf das andere übertragen.

Die Verwendung von epizyklischen Rädergetrieben ist in der Technik weit verbreitet, beispielsweise in Hebewerken, in den Kraftfahrzeugen und in den Erdbewegungsmaschinen.

Ein weiteres Gebiet einer möglichen Anwendung ist jenes der Fahrräder, bei dem zur Zeit gemäss dem Stand der Technik über die Pedale die Kraft der Fahrerbeine dem die Pedale verbindenden Zapfen aufgedrückt wird, der als Antriebswelle wirkt. An dieser Antriebswelle ist ein erstes Zahnrad starr befestigt, das seinerseits über eine Triebkette einem zweiten Zahnrad zugeordnet ist. Dieses zweite Zahnrad ist mit der freilaufenden Achse des Hinterrades starr befestigt, die so als Abtriebswelle wirkt.

Aus der DE198 24 745 A1 ist ein getriebe mit den Merkmalen des Oberbegriffes des Anspruchs 1 und ein Fahrrad mit den Merkmalen des Oberbegriffes des Anspruchs 12 bekannt.

Die Aufgabe der vorliegenden Erfindung liegt darin, insbesondere im Fall in dem die Antriebswelle und die Abtriebswelle koaxial sind, ein epizyklisches Rädergetriebe zu entwickeln, das geeignet ist, große Leistungen zu übertragen, das eine grosse Auswahl an Übersetzungsverhältnisse, d.h. den Verhältnis zwischen der Winkelgeschwindigkeiten der Antriebswelle und der Abtriebswelle, aufweist und das einfach in der Verwendung sowie in der Wartung ist.

Diese Aufgabe wird durch ein epizyklisches Rädergetriebe gelöst, das die Merkmale des Anspruchs 1 aufweist.

Das gegenseitige Kämmen zwischen den entsprechenden Zähnen des Zahnkranzes, des Planetengetriebes und der Zahnräder schließt aus, dass eine Gleitbewegung oder ein Schlup stattfinden kann und das Vorsehen von Zahnrädern ohne biegsamen Antriebsorganen ist die Gewährleistung einer strukturellen Festigkeit des erfindungsgemäßen epizyklischen Rädergetriebes, was die Übertragung von großen Leistungen erlaubt. Auch die Wartung weist keine Probleme auf, da keine Notwendigkeit besteht, das epizyklische Rädergetriebe in einem abgedichteten Gehäuse abzuschließen und es genügt, in regelmäßigen Zeitabschnitten die Zahnräder zu schmieren.

Der Anspruch 2 beansprucht eine besondere Gestaltung des Schiebegliedes, Gestaltung die es ermöglicht eine grosse Zuverlässigkeit hinsichtlich Mechanik und Lauf zu erzielen.

Der Anspruch 3 betrifft eine erste Ausführungsform des erfindungsgemäßen epizyklischen Rädergetnebes, die sich wegen der strukturellen Einfachheit unterscheidet, die auf die Tatsache zurückzuführen ist, daß das Planetengetriebe aus einem einzigen Stück besteht.

Der Anspruch 4 betrifft eine zweite Ausführungsform des erfindungsgemäßen epizyklischen Rädergetriebes, die es erlaubt über eine grosse Auswahl von Übersetzungsverhältnissen zu verfügen. Insbesondere die Tatsache, dass mehrere Zahnkränze sowie mehrere Zahnräder des Planetengetriebes vorhanden sind, erlaubt es unter allen möglichen Kombinationen jene auszusuchen, die sich am meisten dem gewünschten Übersetzungsverhältnis nähert.

Der Anspruch 5 betrifft ein besonderes Merkmal des erfindungsgemäßen epizyklischen Rädergetriebes, das für den Fall geeignet ist, in dem die Antriebswelle und die Abtriebswelle auf abgewandten Seiten des epizyklischen Rädergetriebe angeordnet sind. Auf diese Art und Weise wirkt das epizyklische Rädergetriebe gleichzeitig auch als Übertragungskupplung zwischen verschiedenen Maschinen angehörenden Wellen.

Der Anspruch 6 betrifft ein besonderes Merkmal des erfindungsgemäßen epizyklischen Rädergetriebes, das für den Fall geeignet ist, in dem die Antriebswelle und die Abtriebswelle auf derselben Seite des epizyklischen Rädergetriebes angeordnet sind. Diese Ausführungsform findet insbesondere bei Maschinen mit Doppelwelle Anwendung, wie beispielsweise die Hebewerken oder die Fahrräder. Sie erlaubt es den Platzbedarf erheblich herabzusetzen, wobei das epizyklische Rädergetriebe kompakt und ästhetisch würdig wird.

Anspruch 7 beansprucht eine besondere Ausbildung des Übertragungselementes zwischen Antriebswelle und Planeten-getriebe, die bei Werkzeugmaschinen geeignet ist, wo die Antriebs-welle durch einen Motor angetrieben wird. Dieses weitere Merkmal schließt aus, dass wegen der hohen Winkelgeschwindigkeiten der Wellen lästige Schwingungen entstehen können.

Die Ansprüche 8 und 9 beanspruchen eine weitere besondere Ausbildung des Übertragungselementes zwischen Antriebswelle und Planetengetriebe, jeweils geeignet für den Fall, in dem die Antriebswelle nicht durch einen Motor angetrieben wird, wie dies bei kleinen Winden, wo die Antriebswelle von Hand aus angetrieben wird, und bei Fahrrädern, wo die Antriebswelle durch die Füße angetrieben wird, vorkommt.

Die Ansprüche 10 und 11 beziehen sich auf das Übersetzungs-verhältnis des erfindungsgemäßen epizyklischen Rädergetriebes, also das Verhältnis zwischen der antriebsseitige Winkelgeschwindigkeit, d.h. jene die von der Antriebswelle übertragen wird, und der abtriebsseitige Winkelgeschwindigkeit, d.h. jene die abtriebsseitig der Abtriebswelle übertragen wird. Um das Übersetzungsverhältnis an den einzelnen Anwendungs-bedürfnissen des epizyklischen Rädergetriebes anzupassen, kann man auf das Schiebeglied wirken zum Wählen jenes Zahnrades dessen Merkmale (Durchmesser, Anzahl der Zähne, Abmessungen der Zähne) zusammen mit jenen der entsprechenden Verzahnung des Planetengetriebes, und im Falle der zweiten Ausführungsform, zusammen mit jenen der Verzahnung des entsprechenden Zahnkranzes, das Erreichen des gewünschten Ergebnis ermöglichen.

Eine weitere Aufgabe der vorliegenden Erfindung liegt darin, anzugeben, wie man das erfindungsgemäße epizyklischen Rädergetriebe an ein Fahrrad anwenden könnte. Einer der großen Vorteile dieser Anwendung ist, dass in diesem Fall, anders wie bisher, die Tatsache ausgenutzt werden kann, dass die Antriebswelle und die Abtriebswelle koaxial sind.

Diese Aufgabe wird durch ein Fahrrad gelöst, das die Merkmale des Anspruchs 12 aufweist.

Die Anwendung eines erfindungsgemäßen epizyklischen Rädergetriebes an ein Fahrrad, hat in erster Linie die Abschaffung der Triebkette zur Folge, was eine starke Herabsetzung der Reibung und daher eine kleinere Mühe für den Fahrradfahrer bedeutet. Darüberhinaus, da die Achse der Pedalgruppe nun koaxial mit der Achse des Antriebsrades des Fahrrades (hinten oder auch vorne) ist, kann der Achsenabstand zwischen den beiden Rädern des Fahrrades herabgesetzt werden, da es nicht mehr notwendig ist, den zur Zeit erforderlichen Platzbedarf zur Aufnahme der Pedalgruppe zu berücksichtigen. Dies hat wichtige Verbesserungen der Fahreigenschaften des Fahrrads zur Folge und erlaubt bedeutende Vereinfachungen des Aufbaues des Fahrradrahmens, da man nun auf das typische mittige Rohrdreieck verzichten kann, an dem bis heute die Pedalgruppe befestigt worden ist. Ein bedeutendes, unmittelbares Ergebnis besteht in der Reduzierung des Gewichts des Fahrrades, was die Anstrengung des Fahrradfahrers herabsetzt. Die koaxiale Anordnung der Achse der Pedalgruppe und der freilaufenden Achse des Antriebsrades hat ein weiterer Vorteil zur Folge. In dem Fall in dem das Antriebsrad das Hinterrad ist, kann der Fahrradfahrer eine besonders ergonomische Position einnehmen, die auf optimale Art und Weise bei Geschwindigkeitswettläufen sowohl auf Rennpisten als auch beim Straßenzeitfahren ausgenutzt werden kann.

Der Anspruch 13 beansprucht eine besondere Gestaltung des Schiebegliedes, Gestaltung die es ermöglicht eine grosse Zuverlässigkeit hinsichlich Mechanik und Lauf zu erzielen. Der Ansprüch 14 beansprucht eine einfache und wirksame Lösung, die dem Fahrradfahrer es ermöglicht in genaue und zuverlässige Weise auf dem Schiebeglied die Kraft auszuüben, die es verstellt.

Die Ansprüche 15 und 16 beziehen sich auf zwei verschiedene Ausführungsformen des Fahrrads, in gleicher Weise wie für das epizyklische Rädergetriebe beansprucht wurde. Insbesondere der Anspruch 15 beansprucht das Merkmal, dass das Planetengetriebe aus einem einzigen Stück besteht, sodass ein Höchstmaß von struktureller Einfachheit erzielt wird. Der Anspruch 16 beansprucht hingegen das Merkmal, dass das epizyklische Rädergetriebe mehrere Zahnkränze und das Planetengetriebe mehrere Zahnräder umfasst, deren Anwesenheit es erlaubt, eine größere Auswahl von Übersetzungsverhältnissen zur Verfügung zu haben.

Die Ansprüche 17 und 18 beziehen sich auf das Übersetzungs- verhältnis des erfindungsgemäßen Fahrrads, also das Verhältnis zwischen der antriebsseitige Winkelgeschwindigkeit, d.h. jene die vom Fahrradfahrer über die Pedale der Antriebswelle vorgegeben wird, und der abtriebsseitige Winkelgeschwindigkeit, d.h. jene die abtriebsseitig der Abtriebswelle übertragen wird, die durch die freilaufende Achse des Antriebsrades des Fahrrades gebildet wird. Um das Übersetzungsverhältnis den einzelnen Anwendungsbedürfnissen des Fahrrades anzupassen, wird man das Schiebeglied verstellen zum Verbinden jenes Zahnrades dessen Merkmale (Durchmesser, Anzahl der Zähne, Abmessungen der Zähne) zusammen mit jenen der entsprechenden Verzahnung des Planetengetriebes, und im Falle der zweiten Ausführungsform, zusammen mit jenen der Verzahnung des entsprechenden Zahnkranzes, das Erreichen des gewünschten Ergebnis ermöglichen.

Weitere Vorteile und Einzelheiten der Erfindung werden nachfolgend aufgrund von Ausführungsbeispielen und unter Bezugnahme auf die Figuren der beigelegten Zeichnungen erläutert. Es zeigen,
Figur 1a ein Schema eines ersten Beispiels einer ersten Ausführungsform eines erfindungsgemäßen epizyklischen Rädergetriebes,
Figur 2a ein Schema eines zweiten Beispiels der besagten ersten Ausführungsform eines erfindungsgemäßen epizyklischen Rädergetriebes,
Figur 3a eine schaubildliche Ansicht eines Teils eines Fahrrades, das ein erfindungsgemäßes epizyklisches Rädergetriebe der in Figur 2a dargestellten Art aufweist,
Figur 4a einen schaubildlichen Schnitt des in Figur 3a dar- gestellten Fahrradteils,
Figur 5a einen Querschnitt des in Figur 3a dargestellten Fahrradteils,

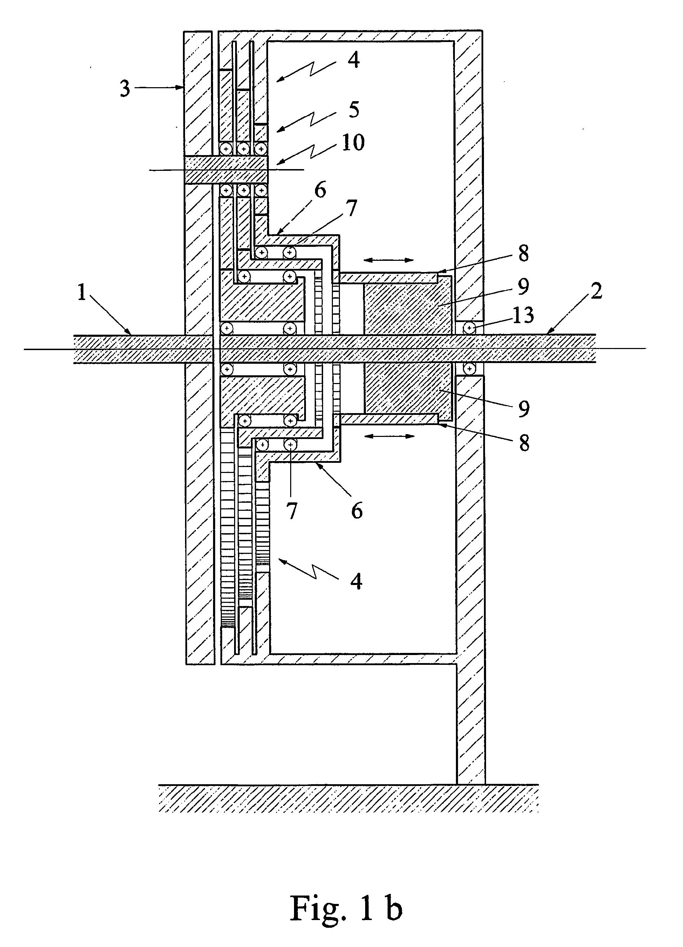

Figur 1b ein Schema eines ersten Beispiels einer zweiten Ausführungsform eines erfindungsgemäßen epizyklischen Rädergetriebes,

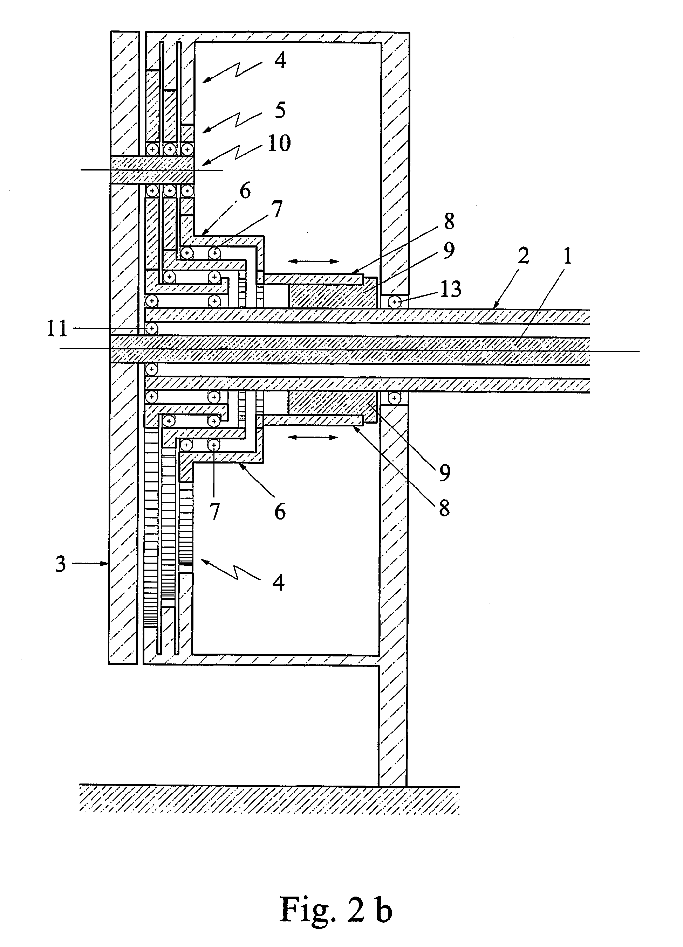

Figur 2b ein Schema eines zweiten Beispiels der besagten zweiten Ausführungsform eines erfindungsgemäßen epizyklischen Rädergetriebes,

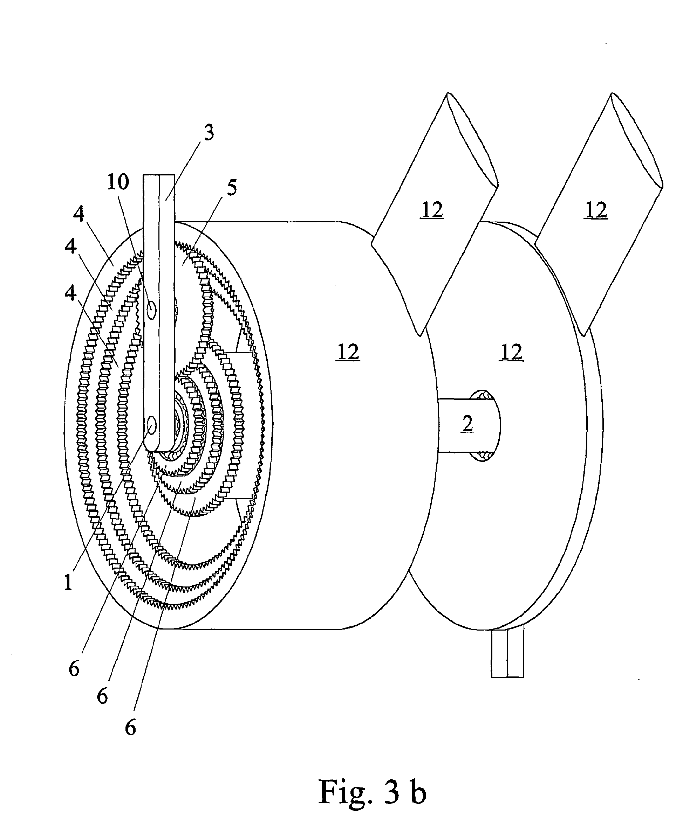

Figur 3b eine schaubildliche Ansicht eines Teiles eines Fahrrads, das ein erfindungsgemäßes epizyklisches Rädergetriebe der in Figur 2b dargestellten Art aufweist,

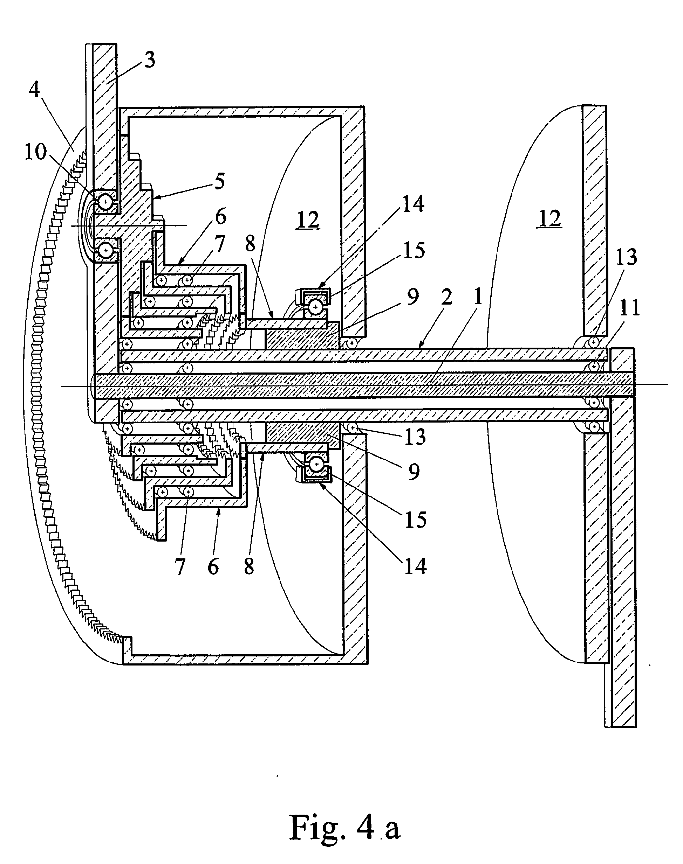

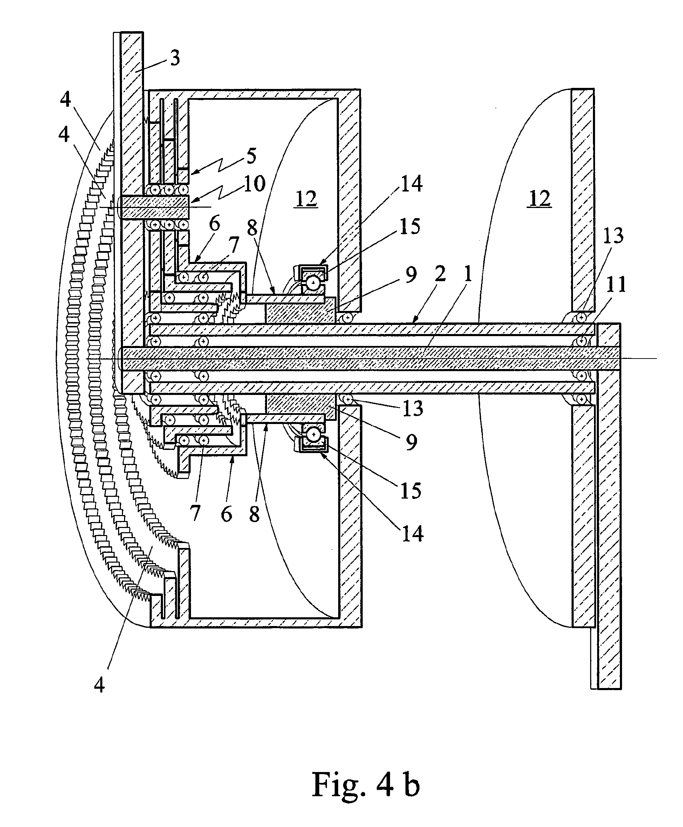

Figur 4b einen schaubildlichen Schnitt des in Figur 3b dargestellten Fahrradteils,

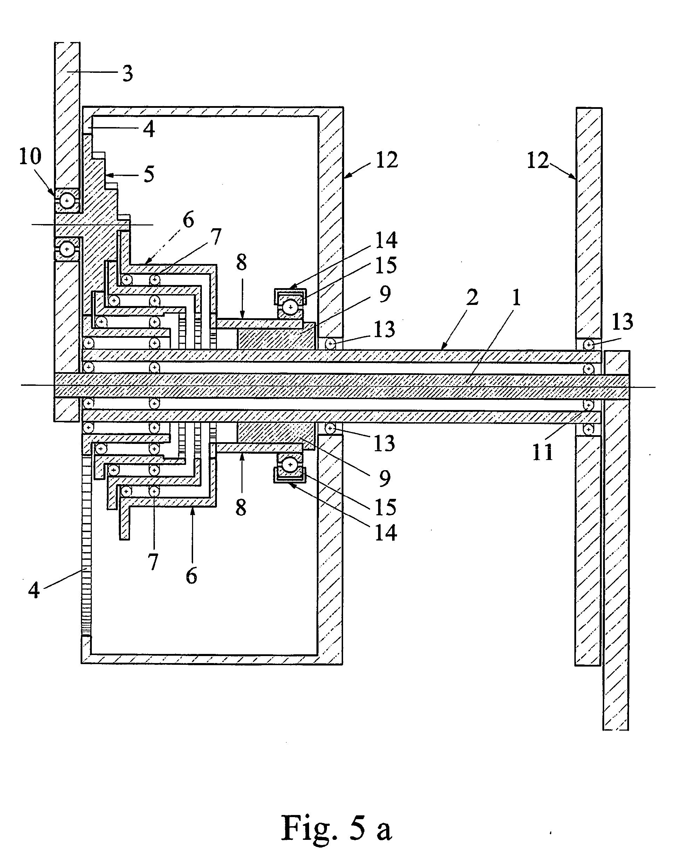

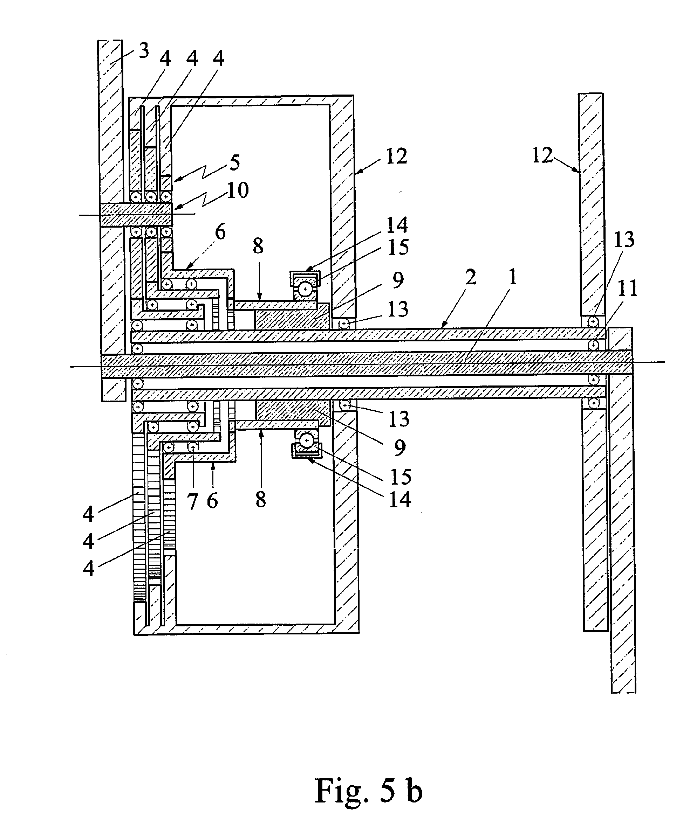

Figur 5b einen Querschnitt des in Figur 3b dargestellten Fahrradteils.

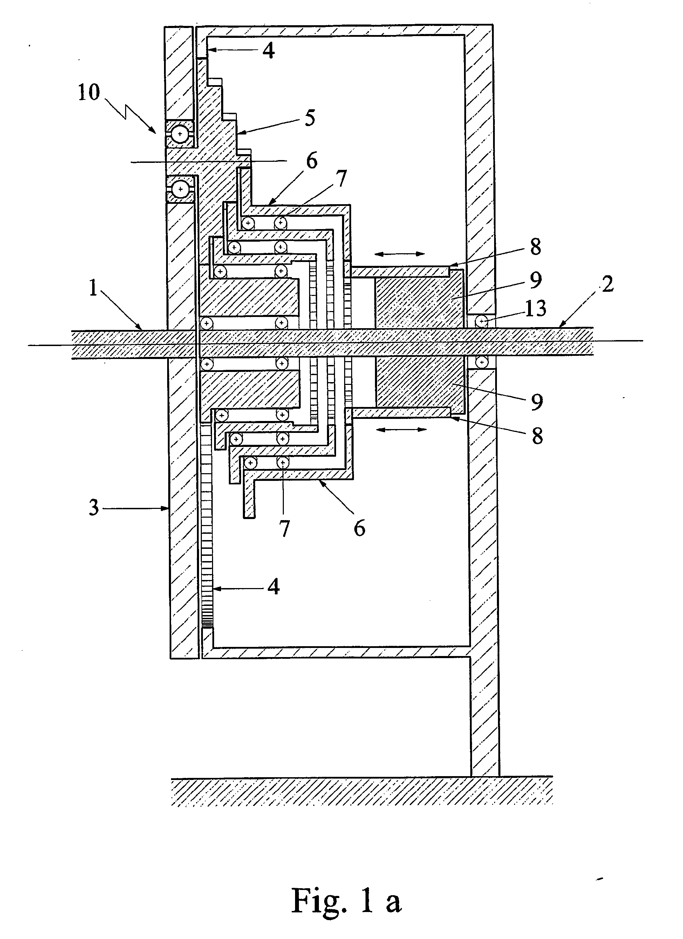

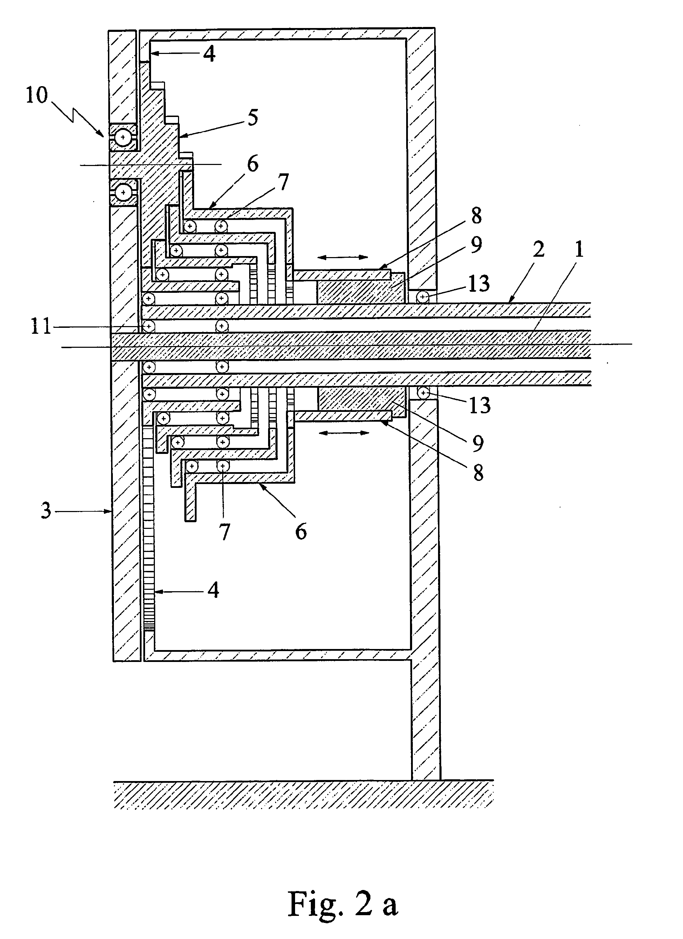

In den Figuren 1a, 2a bzw. 1b, 2b sind schematisch zwei Beispiele einer ersten bzw. einer zweiten Ausführungsform eines erfindungsgemäßen epizyklischen Rädergetriebes dargestellt, zur Übertragung der Leistung zwischen zwei koaxialen Wellen, von denen eine die Antriebswelle 1 und die andere die Abtriebswelle 2 ist, derart dass die antriebsseitig von der Antriebswelle 1 übertragene Winkelgeschwindigkeit von jener die abtriebsseitig an der Abtriebswelle 2 übertragen wird, verschieden ist.

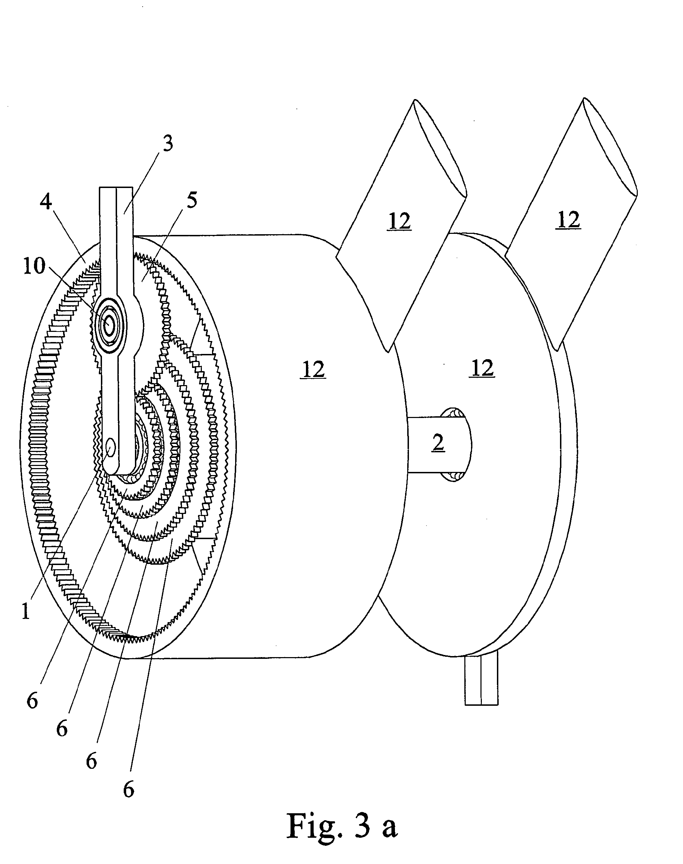

Gemäß der Erfindung umfasst das epizyklische Rädergetriebe ein starr mit der Antriebswelle 1 zu verbindenden Übertragungselement 3 und zumindest einen Zahnkranz 4. Der Zahnkranz 4 weist innen eine Verzahnung und ist gegenüber allen weiteren Bestandteilen des epizyklischen Rädergetriebe festliegend. Zu diesem Zwecke wird er beispielsweise an einer Werkzeugmaschine befestigt, an die das epizyklische Rädergetriebe angebracht wird, oder, wie in den Figuren 1a,2a und 1b,2b dargestellt, am Boden befestigt, wenn das epizyklische Rädergetriebe als Kupplung zwischen den beiden Wellen wirkt, oder an dem Rahmen eines Fahrrades befestigt, wie man nachfolgend unter Bezugnahme auf den Figuren 3a-5a und 3b-5b erläutern wird

Das epizyklische Rädergetriebe umfasst überdies ein mehrere Verzahnungen aufweisendes Planetengetriebe 5, das mit einer dieser Verzahnungen mit der Verzahnung des Zahnkranzes 4 kämmt. Das Planetengetriebe 5 ist drehbar mit dem Übertragungselement 3 verbunden. Unter der ihm während der Drehung der Antriebswelle 1 vom Übertragungselement 3 auferlegten Wirkung, wälzt sich das Planetengetriebe 5 ohne zu gleiten auf der Verzahnung des Zahnkranzes 4, wodurch die Punkte seiner Verzahnung gezwungen werden, sich längs einer Epizykloide zu bewegen.

Das Planetengetriebe 5 kämmt gleichzeitig mit seinen Verzahnungen mit einer Mehrzahl von Zahnrädern 6 und versetzt diese in Drehbewegung.

Diese Zahnräder 6 sind geeignet starr mit der Abtriebswelle 2 verbunden zu werden, sodass bei ihrer Drehung auch die Abtriebswelle 2 in Drehbewegung versetzt wird. Sie weisen eine besondere Gestaltung auf, mit Doppelverzahnung, die in den Figuren dargestellt ist, gemäss welcher jedes Zahnrad 6 circa einen Querschnitt mit doppeltem äusseren abwechselnden Rechtwinkel aufweist. Jedes Zahnrad 6 besteht aus einem ersten Endabschnitt der eine erste Verzahnung aufweist, die geeignet ist mit dem Planetengetriebe 5 zu kämmen, aus einem zweiten Endabschnitt der eine zweite Verzahnung aufweist, die geeignet ist starr mit der Abtriebswelle 2 verbunden zu werden und aus einem Anschlusskörper, der die beiden Endabschnitte verbindet. Die Zahnräder 6 sind mit jeweiligen eigenen mittigen Anschlusskörpern übereinander angeordnet und gegeneinander drehbar gelagert, indem Lager 7, zum Beispiel Kugeln, zwischengeschaltet werden. Das erste Zahnrad 6 ist drehbar auf der Abtriebswelle 2 gelagert.

Das erfindugsgemässe epizyklische Rädergetriebe umfasst darüberhinaus ein zwischen den Zahnrädern 6 und der Abtriebswelle 2 angeordnetes Schiebeglied 8. Das Schiebeglied 8 weist eine Verzahnung auf, die geeignet ist mit jedem der Zanhräder 6 zu kämmen, und ist derart auf einer auf der Abtriebswelle 2 festliegende Hülse 9 gelagert, dass es während der Drehung der Abtriebswelle 2 zusammen mit der Hülse 9 dreht, aber zugleich längs der Längsrichtung der Abtriebswelle 2 zwischen einer Mehrzahl von Positionen verstellbar ist.

Dies kann zum Beispiel dadurch erreicht werden indem in der Hülse 9 eine sich in Längsrichtung der Abtriebwelle 2 erstreckende Nut vorgesehen und in dieser einen Steg des Schiebegliedes 8 angeordnet wird. In jeder der Positionen in der das Schiebeglied 8 verstellt werden kann, kämmt dieses mit seiner Verzahnung jeweils mit der zweiten Verzahnung eines der Zahnräder 6 und stellt dabei eine für die Drehung starre Verbindung zwischen dem Zahnrad 6 und der Abtriebswelle 2 her. Die Verstellung des Schiebegliedes 8 von einer Position zur anderen erfolgt durch eine äussere Einwirkung.

Gemäß der ersten Ausführungsform, dessen zwei Beispiele in den Figuren 1a, 2b ersichtlich sind, besteht das Planetengetriebe 5 aus einer Mehrzahl von miteinander starr verbundenen Zahnrädern. Dies kann erreicht werden sowohl indem mehrere einzelne Zahnräder blokiert werden, zum Beispiel zusammengeschweist werden, als auch indem ein Einzelstück derart bearbeitet wird, das es mehere Verzahnungen gemäss Figuren aufweist. Das Planetengetriebe 5 ist drehbar, zum Beispiel mittels eines Scharnierbolzens 10, mit dem Übertragungselement 3 verbunden. Die Aufgabe des Übertragungselementes 3 liegt darin, dem Planetengetriebe 5 die Leistung der Antriebswelle 1 zu übertragen, derart dass diese Leistung dann durch eines der Zahnräder 6 und das Schiebeglied 8 der Abtriebswelle 2 weiter übertragen werden kann.

Dank dieser besonderen Anordnung, wälzt sich, aufgrund der Drehung der Antriebswelle 1, das Planetengetriebe 5 ohne zu gleiten auf der Verzahnung des Zahnkranzes 4 und die Punkte seiner Verzahnung werden gezwungen, sich längs einer Epizykloide zu bewegen.

Gleichzeitig kämmt das Planetengetriebe 5 auch mit den Zahnrädern 6 und versetzt sie in Drehbewegung. Durch das Schiebeglied 8 ist eines der Zahnräder 6 starr mit der Abtriebswelle 2 verbunden, wodurch die Drehung des Planetengetriebes 5 eine identische Drehung der Abtriebswelle 2 zur Folge hat.

Die Drehungen der Antriebswelle 1, der Zahnräder 6 und der Abtriebswelle 2 sind gleichsinnig, während die Drehung des Planetengetriebes 5 aufgrund der Epizykloidenbewegung, der es unterliegt, gegensinnig ist.

Das Übersetzungsverhältnis ist durch die Struktur des erfindungsgemäßen epizyklischen Rädergetriebes bestimmt. Bei dieser ersten Ausführungsform wird es erhalten, indem die Zahl eins der Zahl addiert wird, die erhalten wird, indem jeweils folgende zwei weitere Zahlen miteinander multipliziert werden: die Zahl die erhalten wird indem die Anzahl der Zähne der Verzahnung des Zahnkranzes 4 durch die Anzahl der Zähne jener Verzahnung des Planetengetriebes 5, die mit dem Zahnkranz 4 kämmt, geteilt wird und
die Zahl die erhalten wird indem die Anzahl der Zähne der Verzahnung des Planetengetriebes 5 die mit dem jeweiligen Zahnrad 6 kämmt, das in dem Augenblick durch das Schiebeglied 8 mit der Abtriebswelle 2 verbunden ist, durch die Anzahl der Zähne der Verzahnung dieses Zahnrades 6 geteilt wird.

Um das Übersetzungsverhältnis zu ändern, genügt es von aussen auf dem Schiebeglied 8 einzuwirken um es zu verstellen, insbesondere um es von einem Zahnrad 6 zu lösen und mit einem anderen eine verschiedene Anzahl von Zähne aufweisenden Zahnrad 6 kämmen zu lassen.

Gemäß der zweiten Ausführungsform des erfindungsgemäßen epizyklischen Rädergetriebes, von dem zwei Beispiele in den Figuren 1b, 2b ersichtlich sind, umfasst das Planetengetriebe 5 eine Mehrzahl von Zahnkränze 4. Jeder Zahnkranz 4 weist innen eine Verzahnung und ist gegenüber allen weiteren Bestandteilen des epizyklischen Rädergetriebes festliegend. Seinerseits umfasst das Planetengetriebe 5 eine Mehrzahl von Zahnrädern, die alle drehbar mit dem Übertragungselement 3 verbunden und gegeneinander frei drehbar sind. Auch in diesem Fall kann dies zum Beispiel mittels des Scharnierbolzens 10 erreicht werden. Diese drehbare Verbindung zwischen dem Planetengetriebe 5 und dem Übertragungselement 3 ist wesentlich, damit gewährleistet werden kann dass die epizyklische Bewegung die der Erfindung zugrunde liegt stattfindt. Die praktische Anordnung dieser Verbindung kann in verschiedener, dem Fachmann bekannter Art und Weise erreicht werden.

Jedes Zahnrad des Planetengetriebes 5 kämmt mit der eigenen Verzahnung mit der Verzahnung des entsprechenden Zahnkranzes 4. Zwischen den Zahnrädern 6 und der Abtriebswelle 2 ist wiederum das Schiebeglied 8 angeordnet, sodass eine starre Verbindung zwischen einem der Zahnrädern 6 und der Abtrieswelle 2 hergestellt werden kann.

Dank dieser besonderen Anordnung, wälzt sich, aufgrund der Drehung der Antriebswelle 1, das Planetengetriebe 5 ohne zu gleiten auf die Verzahnungen aller Zahnkränze 4 und die Punkte seiner Verzahnungen werden gezwungen, sich längs jeweiligen Epizykloiden zu bewegen.

Gleichzeitig kämmt das Planetengetriebe 5 auch mit den Zahnrädern 6 und versetzt sie in Drehbewegung. Durch das Schiebeglied 8 ist eines der Zahnräder 6 starr mit der Abtriebswelle 2 verbunden, wodurch die Drehung des Planetengetriebes 5 eine identische Drehung der Abtriebswelle 2 zur Folge hat.

Die Drehungen der Antriebswelle 1, der Zahnräder 6 und der Abtriebswelle 2 sind gleichsinnig, während die Drehung des Planetengetriebes 5 aufgrund der Epizykloidenbewegung, der es unterliegt, gegensinnig ist.

Auch für diese zweite Ausführungform ist das Übersetzungsverhältnis durch die Struktur des erfindungsgemäßen epizyklischen Rädergetriebes bestimmt. Insbesondere wird es erhalten, indem die Zahl eins der Zahl addiert wird, die erhalten wird, indem jeweils folgende zwei weitere Zahlen durch geteilt werden:
die Anzahl der Zähne der Verzahnung jenes Zahnkranzes 4 der durch das Planetengetriebe 5 mit dem jeweiligen Zahnrad 6 verbunden ist, das in dem Augenblick durch das Schiebeglied 8 mit der Abtriebswelle 2 verbunden ist
und die die Anzahl der Zähne dieses Zahnrades 6.

Natürlich ist auch in diesem Fall möglich das Übersetzungsverhältnis zu ändern, indem man ganz einfach von aussen auf dem Schiebeglied 8 einwirkt, um es zu verstellen, insbesondere um es von einem Zahnrad 6 zu lösen und mit einem anderen eine verschiedene Anzahl von Zähne aufweisenden Zahnrad 6 kämmen lässt.

Für beide, oben erwähnten Ausführungsformen sind zwei verschiedene Situationen möglich, was die Anordnung der Wellen 1, 2 betrifft, denen zwei verschiedene Beispiele für jede Ausführungsform entsprechen.

In der ersten Situation, auf die jeweils die Figuren 1a und 1b Bezug nehmen, sind die Wellen 1, 2 auf abgewandten Seiten des epizyklischen Rädergetriebes angeordnet. In der zweiten Situation, auf die jeweils die Figuren 2a und 2b Bezug nehmen, sind die Wellen 1, 2 auf derselben Seite des epizyklischen Rädergetriebe angeordnet.

Das erfindungsgemäße epizyklische Rädergetriebe passt sich gut an beide, oben erwähnten Situationen an.

In der ersten, wie erwähnt, in den Figuren 1a, 1b dargestellten Situation, ist das Übertragungselement 3 dazu bestimmt mit der Antriebswelle 1 starr verbunden zu werden, und zwar an jener eigenen Seite die der Seite abgewandt ist, an der es drehbar mit dem Planetengetriebe 5 verbunden ist.

In der zweiten, wie erwähnt, in den Figuren 2a, 2b dargestellten Situation, ist das Übertragungselement 3 wiederum dazu bestimmt mit der Antriebswelle 1 starr verbunden zu werden, aber diesmal an jener eigenen gleichen Seite an der es drehbar mit dem Planetengetriebe 5 verbunden ist. Darüberhinaus ist in diesem Fall die Abtriebswelle 2 hohl und die Antriebswelle 1 ist in dieser eingebracht und zwischen den beiden Wellen 1 und 2 sind zweckmäßigerweise Lager 11, beispielsweise Kugeln, zwischengeschaltet, die deren gegenseitige Drehung um die gemeinsame Drehachse herum erlauben. Unter Bezugnahme auf beide Ausführungsformen, ist das Übertragungselement 3 zweckmäßigerweise eine Scheibe, die Vorsprünge oder Ausnehmungen aufweisen kann, um eventuelle Schwingungen der anderen, sich drehenden Bestandteile des epizyklischen Rädergetriebes auszugleichen.

Die Form dieses Übertragungselementes 3 kann auch verschieden von einer Scheibe sein. Sie kann beispielsweise auch jene einer Kurbelstange oder einer Pedalstange sein.

In den Figuren 3a-5a und 3b-5b ist ein Teil eines Fahrrades dargestellt, auf das ein erfindungsgemäßes epizyklisches Rädergetriebe angebracht wurde, zur Übertragung der Leistung zwischen zwei koaxialen Wellen von denen eine eine Antriebswelle 1 ist, die aus dem die Pedale verbindenden Zapfen besteht, und die andere eine Abtriebswelle 2 ist, die durch die freilaufende Achse des Antriebsrades gebildet wird, derart dass die antriebsseitig von der Antriebswelle 1 übertragene Winkelgeschwindigkeit von jener die abtriebsseitig der Abtriebswelle 2 übertragen wird verschieden ist. Gemäß der Erfindung, damit am Fahrrad einer der oben genannten Ausführungsformen des erfindungsgemäßen epizyklischen Rädergetriebes angewandt werden kann, muss die Abtriebswelle 2 hohl sein und die Antriebswelle 1 muss in dieser eingebracht sein, derart dass deren gegenseitige Drehung um die gemeinsame Achse herum erlaubt wird. Dies kann erhalten werden, indem zwischen den beiden Wellen 1 und 2 Lager 11, beispielsweise Kugeln, zwischengeschaltet werden.

Die Abtriebswelle 2 ist ihrerseits, mittels von Lagern 13, beispielsweise Kugeln, drehbar im Rahmen 12 des Fahrrades gelagert, wie dies in den Figuren dargestellt ist.

Die beiden Ausführungsformen des epizyklischen Rädergetriebes wurden schon oben mit Bezug auf den Figuren 1a, 2a und 1b, 2b erläutert.

Im vorliegenden Fall ist das Übertragungselement die Stange 3 eines Pedals, während alle übrigen Teile so sind wie sie bereits erläutert wurden.

Damit der Zahnkranz 4 bzw. die Zahnkränze 4 gegenüber allen anderen Bestandteilen des epizyklischen Rädergetriebes festliegend ist bzw sind diese an dem Rahmen 12 des Fahrrades befestigt. In den Figuren wurde aus Klarheitsgründen der Zeichnungen das Rad des Fahrrades nicht dargestellt.

In der ersten Ausführungsform des Fahrrades, jener in der man ein epizyklisches Rädergetriebe anbringt, das zumindest einen Zahnkranz 4 aufweist und auf der sich die Figuren 3a-5a beziehen, versetzt der Fahrradfahrer durch Einwirkung auf die Pedale die Antriebswelle 1 in Drehbewegung. Unter der ihm während der Drehung der Antriebswelle 1 von der Stange 3 auferlegten Wirkung, wälzt sich das Planetengetriebe 5 ohne zu gleiten mit einer seiner Verzahnungen auf der Verzahnung des Zahnkranzes 4. Auf dieser Weise werden die Punkte dieser Verzahnung gezwungen, sich längs einer Epizykloide zu bewegen.

Gleichzeitig kämmen die Verzahnungen des Planetengetriebes 5 mit den entsprechenden Verzahnungen der Zahnrädern 6 und versetzen sie in Drehbewegung. Unter allen möglichen sich dreheneden Zahnrädern 6, wird eines, ausgewählt nach Bedarf, mit der Abtriebswelle 2 verbunden, indem mit eine Einwirkung von aussen das Schiebeglied 8 in der entsprechenden verbindenden Position verstellt wird. Auf dieser Weise wird die Drehbewegung der Antriebwelle 1 durch das Planetengetriebe 5, die Zahnrädern 6, das Schiebeglied 8 und die Hülse 9 an die Abtriebswelle 2 übertragen.

Im vorliegenden Fall in dem das epizyklische Rädergetriebe an ein Fahrrad angewandt wird, kann die äussere Einwirkung die das Schiebeglied 8 verstellt direkt vom Fahrradfahrer durch einen üblichen Entgleiser für Fahrräder ausgeübt werden, von dem schematisch in den Figuren die Zange 14 dargestellt wurde. Zweckmässigerweise kann man zwei Zangen 14 vorsehen, wie in den Figuren dargestellt wurde. Die Zange 14 wirkt auf dem Aussengehäusse eines Kugellagers 15. Das Vorhandensein dieses Kugellagers 15 ist dadurch berechtigt, dass die Zange 14 nur in Längsrichtung der Abtriebswelle 2 verstellt werden kann, aber sie kann nicht zusammen mit dieser drehen. Zweckmässigerweise ist dieses Kugellager 15 der Art mit vier Berührüngspunkte, in dem die Nuten in denen die Kugeln rollen nicht einen runden sondern circa einen dreieckigen Queschnitt aufweisen, derart dass die Kugeln nicht vollflächig sondern lediglich in vier Punkte aufliegen. Dieser Umstand erhöht die Rollfähigkeit der Kugeln bei nicht simmetrisch ausgeübten Kräften.

Das Innengehäusse des Kugellagers 15 ist auf dem Schiebeglied 8 befestigt und dreht zusammen mit diesem.

Das das Freilaufen des Fahrrades ermöglichende Mechanismus, d.h. jener der beim Nichttreten auf den Pedalen oder beim Schieben des Fahrrades das Drehen des Rades erlaubt, ist bekannt und in der Hülse 9 eingebracht.

Die Figuren 3b-5b bezien sich auf die zweite Ausführungsform des Fahrrades, jene in der man ein epizyklisches Rädergetriebe anbringt, das eine Mehrzahl von Zahnkränze 4 aufweist, mit jeder welcher eine der Verzahnungen des Planetengetriebes 5 kämmt. Auch in dieser Ausführungsform versetzt der Fahrradfahrer die Antriebswelle 1 in Drehbewegung wenn er auf die Pedale einwirkt. Unter der ihm während der Drehung der Antriebswelle 1 von der

Stange 3 auferlegten Wirkung, wälzt sich das Planetengetriebe 5 ohne zu gleiten mit seinen jeweiligen Verzahnungen auf die Verzahnungen der Zahnkränze 4. Auf diese weise werden die Punkte dieser Verzahnungen gezwungen, sich längs jeweiligen Epizykloiden zu bewegen.

Gleichzeitig kämmen die Verzahnungen des Planetengetriebes 5 mit den entsprechenden Verzahnungen der Zahnrädern 6 und versetzen sie in Drehbewegung. Wiederum wird unter allen möglichen sich drehenden Zahnrädern 6, eines, ausgewählt nach Bedarf, mit der Abtriebswelle 2 verbunden, indem mit eine Einwirkung von aussen das Schiebeglied 8 in der entsprechenden verbindenden Position verstellt wird. Auf dieser Weise wird die Drehbewegung der Antriebwelle 1 durch das Planetengetriebe 5, die Zahnrädern 6, das Schiebeglied 8 und die Hülse 9 an die Abtriebswelle 2 übertragen.

Auch in dieser zweiten Ausführungsform des Fahrrades, kann die äussere Einwirkung die das Schiebeglied 8 verstellt direkt vom Fahrradfahrer durch einen üblichen Entgleiser für Fahrräder ausgeübt werden, in der Weise die anhand der ersten Ausführungsform bereits erläutert wurde und auf die verwiesen wird.

Was das Übersetzungsverhältnis des erfindungsgemässen Fahrrades betrifft, ist dieses für beide Ausführungsformen des Fahrrades das gleiche des jeweils an dem Fahrrad angewandten epizyklischen Rädergetriebes und wurde bereits anhand der Beschreibung des alleinigen epizyklischen Rädergetriebe erläutert auf die verwiesen wird.

## Patentansprüche

1. Epizyklisches Rädergetriebe zur Übertragung der Leistung zwischen zwei koaxialen Wellen, von denen eine die Antriebswelle (1) und die andere die Abtriebswelle (2) ist, derart dass die antriebsseitig von der Antriebswelle (1) übertragene Winkelgeschwindigkeit von jener die abtriebsseitig der Abtriebswelle (2) übertragen wird, verschieden ist, umfassend:
ein starr mit der Antriebswelle (1) zu verbindenden Übertragungselement (3),
zumindest einen Zahnkranz (4), der innen mit einer Verzahnung versehen ist und gegenüber allen anderen Bestandteilen des epizyklischen Rädergetriebes festliegend ist,
ein mehrere Verzahnungen aufweisendes Planetengetriebe (5), das mit einer dieser Verzahnungen mit der Verzahnung des Zahnkranzes (4) kämmt, drehbar mit dem Übertragungselement (3) verbunden ist und sich unter der, ihm während der Drehung der Antriebswelle (1) vom Übertragungselement (3) auferlegten Wirkung ohne zu gleiten auf der Verzahnung des Zahnkranzes (4) wälzt, wodurch die Punkte seiner Verzahnung gezwungen werden sich längs einer jeweiligen Epizykloide zu bewegen,
eine Mehrzahl von Zahnrädern (6), von denen jedes einerseits mit einer entsprechenden Verzahnung des Planetengetriebes (5) kämmt und andereseits geeignet ist starr mit der Abtriebswelle (2) verbunden zu werden,
ein zwischen der Mehrzahl von Zahnrädern (6) und der Abtriebswelle (2) angeordnetes Schiebeglied (8), das längs der Längsrichtung der Abtriebswelle (2) zwischen einer Mehrzahl von Positionen verstellbar ist, in jeder welcher es jeweils eines der Zahnräder (6) und die Abtriebswelle (2) starr miteinander verbindet; jedes Zahnrad (6) weist zwei Verzahnungen auf, und zwar eine erste Verzahnung, die geeignet ist mit dem Planetengetriebe (5) zu kämmen, und eine zweite Verzahnung, die geeignet ist starr mit der Abtriebswelle (2) verbunden zu werden, **dadurch gekennzeichnet dass** die Zahnräder (6) mit jeweiligen eigenen mittigen Anschlusskörpern übereinander angeordnet und gegeneinander drehbar gelagert sind.

2. Epizyklisches Rädergetriebe nach Anspruch 1, **dadurch gekennzeichnet, dass** das Schiebeglied (8) eine Verzahnung aufweist, die geeignet ist mit jedem der Zanhräder (6) zu kämmen, und derart auf einer auf der Abtriebswelle (2) festliegende Hülse (9) gelagert ist, dass es während der Drehung der Abtriebswelle (2) zusammen mit der Hülse (9) dreht, aber zugleich längs der Längsrichtung der Abtriebswelle (2) zwischen einer Mehrzahl von Positionen verstellbar ist.

3. Epizyklisches Rädergetriebe nach Anspruch 1, **dadurch gekennzeichnet, dass** das Planetengetriebe (5) aus einer Mehrzahl von miteinader starr verbundenen Zahnräder besteht.

4. Epizyklisches Rädergetriebe nach Anspruch 1, **dadurch gekennzeichnet, dass** es eine Merhzahl von Zahnkränze (4) umfasst und dass das Planetengetriebe (5) eine Mehrzahl von Zahnrädern umfasst, die alle drehbar mit dem Übertragungselement (3) verbunden und gegeneinander frei drehbar sind, wobei jedes Zahnrad mit der eigenen Verzahnung mit der Verzahnung des zugeordneten Zahnkranzes (4) kämmt.

5. Epizyklisches Radergetriebe nach Anspruch 3, **dadurch gekennzeichnet, dass** das Übertragungselement (3) dazu bestimmt ist mit der Antriebswelle (1) starr verbunden zu werden und zwar an jener eigenen Seite die der Seite abgewandt ist an der es drehbar mit dem Planetengetriebe (5) verbunden ist, wobei die Antriebswelle (1) und die Abtriebswelle (2) sich, nachdem sie mit dem Epizyklischen Rädergetriebe verbunden worden sind, auf abgewandten Seiten desselben befinden.

6. Epizyklisches Rädergetriebe nach Anspruch 3, **dadurch gekennzeichnet, dass** das Übertragungselement (3) dazu bestimmt ist mit der Antriebswelle (1) starr verbunden zu werden und zwar an jener eigenen Seite, an der es drehbar mit dem Planetengetriebe (5) verbunden ist, wobei die Antriebswelle (1) und die Abtriebswelle (2) sich, nachdem sie mit dem epizyklischen Rädergetriebe verbunden worden sind, auf derselben Seite desselben befinden und derart angeordnet sind, dass die Abtriebswelle (2) hohl und die Antriebswelle (1) in dieser eingebracht ist und zwischen den Wellen Lagern (11) zwischengeschaltet sind, die deren gegenseitige Drehung um die gemeinsame Achse herum erlauben.

7. Epizyklisches Rädergetriebe nach Anspruch 5, **dadurch gekennzeichnet, dass** das Übertragungselement (3) eine Scheibe ist, die Vorsprünge oder Ausnehmungen aufweist, um eventuelle Schwingungen der anderen, umlaufenden Bestandteile des epizyklischen Rädergetriebes auszugleichen.

8. Epizyklisches Rädergetriebe nach Anspruch 5, **dadurch gekennzeichnet, dass** das Übertragungselement (3) die Stange einer Kurbel ist.

9. Epizyklisches Rädergetriebe nach Anspruch 5, **dadurch gekennzeichnet, dass** das Übertragungselement (3) die Stange eines Pedals ist.

10. Epizyklisches Rädergetriebe nach Anspruch 3, **dadurch gekennzeichnet, dass** das Übersetzungsverhältnis erhalten wird, indem die Zahl eins der Zahl addiert wird, die erhalten wird, indem jeweils folgende zwei weitere Zahlen miteinander multipliziert werden:
die Zahl die erhalten wird indem die Anzahl der Zähne der Verzahnung des Zahnkranzes (4) durch die Anzahl der Zähne jener Verzahnung des Planetengetriebes (5), die mit dem Zahnkranz (4) kämmt, geteilt wird und
die Zahl die erhalten wird indem die Anzahl der Zähne der Verzahnung des Planetengetriebes (5) die mit dem jeweiligen Zahnrad (6) kämmt, das in dem Augenblick durch das Schiebeglied (8) mit der Abtriebswelle (2) verbunden ist, durch die Anzahl der Zähne der Verzahnung dieses Zahnrades (6) geteilt wird.

11. Epizyklisches Rädergetriebe nach Anspruch 4, **dadurch gekennzeichnet, dass** das Übersetzungsverhältnis erhalten wird, indem die Zahl eins der Zahl addiert wird, die erhalten wird, indem jeweils folgende zwei weitere Zahlen durch geteilt werden:
die Anzahl der Zähne der Verzahnung jenes Zahnkranzes (4) der durch das Planetengetriebe (5) mit dem jeweiligen Zahnrad (6) verbunden ist, das in dem Augenblick durch das Schiebeglied (8) mit der Abtriebswelle (2) verbunden ist
und die die Anzahl der Zähne dieses Zahnrades (6).

12. Fahrrad, mit einem epizyklischen Rädergetriebe zur Übertragung der Leistung zwischen zwei koaxialen Wellen, von denen eine die Antriebswelle (1) ist, die aus dem die Pedale verbindenden Zapfen besteht, und die andere die Abtriebswelle (2) ist, die durch die freilaufende Achse des Antriebsrades gebildet wird, derart dass die antriebsseitig von der Antriebswelle (1) übertragene Winkelgeschwindigkeit von jener die abtriebsseitig der Abtriebswelle (2) übertragen wird, verschieden ist, dass die Abtriebswelle (2) hohl ist und die Antriebswelle (1) in dieser eingebracht ist, wobei zwischen den beiden Wellen Lager (11) eingebracht sind, die deren gegenseitige Drehung um die gemeinsame Achse herum erlauben und dass das epizyklische Rädergetriebe umfasst:
eine starr mit der Antriebswelle (1) zu verbindender Stange (3) eines Pedals,
zumindest einen Zahnkranz (4), der innen mit einer Verzahnung versehen ist und gegenüber allen anderen Bestandteilen des epizyklischen Rädergetriebes festliegend ist,
ein mehrere Verzahnungen aufweisendes Planetengetriebe (5), das mit einer dieser Verzahnungen mit dem Zahnkranz (4) kämmt,
drehbar mit der Stange (3) verbunden ist und sich unter der, ihm während der Drehung der Antriebswelle (1) von der Stange (3) auferlegten Wirkung ohne zu gleiten auf der Verzahnung des Zahnkranzes (4) wälzt, wodurch die Punkte seiner Verzahnung gezwungen werden sich längs einer jeweiligen Epizykloide zu bewegen, eine Mehrzahl von Zahnrädern (6), von denen jedes einerseits mit einer entsprechenden Verzahnung des Planetengetriebes (5) kämmt und andereseits geeignet ist starr mit der Abtriebswelle (2) verbunden zu werden,
ein zwischen der Mehrzahl von Zahnrädern (6) und der Abtriebswelle (2) angeordnetes Schiebeglied (8), das längs der Längsrichtung der Abtriebswelle (2) zwischen einer Mehrzahl von Positionen verstellbar ist, in jeder welcher es jeweils eines der Zahnräder (6) und die Abtriebswelle (2) starr miteinander verbindet
jedes Zahnrad (6) weist zwei Verzahnungen auf, und zwar eine erste Verzahnung, die geeignet ist mit dem Planetengetriebe (5) zu kämmen, und eine zweite Verzahnung, die geeignet ist starr mit der Abtriebswelle (2) verbunden zu werden und **dadurch gekennzeichnet, dass** die Zahnräder (6), mit jeweiligen eigenen mittigen Anschlusskörpern übereinander angeordnet und gegeneinander drehbar gelagert sind.

13. Fahrrad nach Anspruch 12, **dadurch gekennzeichnet, dass** das Schiebeglied (8) eine Verzahnung aufweist, die geeignet ist mit jedem der Zanhräder (6) zu kämmen, und derart auf einer auf der Abtriebswelle (2) festliegende Hülse (9) gelagert ist, dass es während der Drehung der Abtriebswelle (2) zusammen mit der Hülse (9) dreht, aber zugleich längs der Längsrichtung der Abtriebswelle (2) zwischen einer Mehrzahl von Positionen verstellbar ist.

14. Fahrrad nach Anspruch 13, **dadurch gekennzeichnet, dass** die Verstellung des Schiebegliedes (8) direkt vom Fahrradfahrer durch die Zange (14) eines Entgleiser für Fahrräder erzeugt wird, die auf dem Aussengehäusse eines Kugellagers (15) wirkt, dessen Innengehäusse auf dem Schiebeglied (8) befestigt ist und zusammen mit diesem dreht.

15. Fahrrad nach Anspruch 12, **dadurch gekennzeichnet, dass** das Planetengetriebe (5) aus einer Mehrzahl von miteinader starr verbundenen Zahnräder besteht.

16. Fahrrad nach Anspruch 12, **dadurch gekennzeichnet, dass** es eine Merhzahl von Zahnkränze (4) umfasst und dass das Planetengetriebe (5) eine Mehrzahl von Zahnrädern umfasst, die alle drehbar mit der Stange (3) verbunden und gegeneinander frei drehbar sind, wobei jedes Zahnrad mit der eigenen Verzahnung mit der Verzahnung des zugeordneten Zahnkranzes (4) kämmt.

17. Fahrrad nach Anspruch 15, **dadurch gekennzeichnet, dass** das Übersetzungsverhältnis erhalten wird, indem die Zahl eins der Zahl addiert wird, die erhalten wird, indem jeweils folgende zwei weitere Zahlen miteinander multipliziert werden:
die Zahl die erhalten wird indem die Anzahl der Zähne der Verzahnung des Zahnkranzes (4) durch die Anzahl der Zähne jener Verzahnung des Planetengetriebes (5), die mit dem Zahnkranz (4) kämmt, geteilt wird und
die Zahl die erhalten wird indem die Anzahl der Zähne der Verzahnung des Planetengetriebes (5) die mit dem jeweiligen Zahnrad (6) kämmt, das in dem Augenblick durch das Schiebeglied (8) mit der Abtriebswelle (2) verbunden ist, durch die Anzahl der Zähne der Verzahnung dieses Zahnrades (6) geteilt wird.

18. Fahrrad nach Anspruch 16, **dadurch gekennzeichnet, dass** das Übersetzungsverhältnis erhalten wird, indem die Zahl eins der Zahl addiert wird, die erhalten wird, indem jeweils folgende zwei weitere Zahlen durch geteilt werden:
die Anzahl der Zähne der Verzahnung jenes Zahnkranzes (4) der durch das Planetengetriebe (5) mit dem jeweiligen Zahnrad (6) verbunden ist, das in dem Augenblick durch das Schiebeglied (8) mit der Abtriebswelle (2) verbunden ist und
die die Anzahl der Zähne dieses Zahnrades (6).

## Claims

1. An epicyclic train for transmitting power between two coaxial shafts, one being a driving shaft (1) and the other a driven shaft (2), in such a way that the input speed transmitted by the driving shaft (1) is different to the output speed transmitted to the driven shaft (2), comprising:
a transmission element (3) to be rigidly connected to the driving shaft (1),
at least one ring gear (4), the inside of which comprises toothing and which is stationary relative to all of the other components of the epicyclic train,
a planetary gear (5), comprising two or more sets of toothing and using one of these sets of toothing to mesh with the toothing of the ring gear (4), being rotatably connected to the transmission element (3) and subject to the action imposed on it by the latter during rotation of the driving shaft (1) so that it rolls without sliding on the toothing of the ring gear (4) in such a way that the tips of its respective toothing are forced to move along a respective epicycloid,
a plurality of gears (6), each on one side meshing with a respective toothing of the planetary gear (5) and on the other side designed to be rigidly connected to the driven shaft (2),
a slider element (8), interposed between the plurality of gears (6) and the driven shaft (2) and able to translate in the longitudinal direction of the driven shaft (2) between a plurality of positions, in each of which on each occasion it rigidly connects one of the gears (6) and the driven shaft (2) to each other;
each gear (6) comprising two sets of toothing, specifically first toothing designed to mesh with the planetary gear (5) and second toothing designed to be rigidly connected to the driven shaft (2), **characterised in that** the central connecting bodies of the gears (6) are on top of each other and they are rotatably supported one on top of another.

2. The epicyclic train according to claim 1, **characterised in that** the slider element (8) comprises toothing designed to mesh with each of the gears (6) and is supported on a sleeve (9) in turn integral with the driven shaft (2) in such a way that it rotates together with the sleeve (9) during rotation of the driven shaft (2), but at the same time can translate in the longitudinal direction of the driven shaft (2) between a plurality of positions.

3. The epicyclic train according to claim 1, **characterised in that** the planetary gear (5) comprises a plurality of gear wheels which are rigidly connected to each other.

4. The epicyclic train according to claim 1, **characterised in that** it comprises a plurality of ring gears (4) and the planetary gear (5) comprises a plurality of gear wheels, all rotatably connected to the transmission element (3) and free to rotate relative to each other, the toothing of each meshing with the toothing of the associated ring gear (4).

5. The epicyclic train according to claim 3, **characterised in that** the transmission element (3) is designed to be rigidly connected to the driving shaft (1) on its side opposite the one on which it is rotatably connected to the planetary gear (5), once the driving shaft (1) and the driven shaft (2) are connected to the epicyclic train on opposite sides of it.

6. The epicyclic train according to claim 3, **characterised in that** the transmission element (3) is designed to be rigidly connected to the driving shaft (1) on its side on which it is rotatably connected to the planetary gear (5), once the driving shaft (1) and the driven shaft (2) are connected to the epicyclic train on the same side of it and being positioned in such a way that the driven shaft (2) is hollow and the driving shaft (1) is inserted in it and interposed between the two shafts there are supports (11) designed to allow their reciprocal rotation about the shared axis.

7. The epicyclic train according to claim 5, **characterised in that** the transmission element (3) is a disk, comprising projections or recesses to balance out any vibrations by the other rotary components of the epicyclic train.

8. The epicyclic train according to claim 5, **characterised in that** the transmission element (3) is the rod of a crank.

9. The epicyclic train according to claim 5, **characterised in that** the transmission element (3) is the rod of a pedal.

10. The epicyclic train according to claim 3, **characterised in that** the gear ratio is obtained by adding the number one to the number obtained by multiplying on each occasion the following two further numbers:
the number obtained by dividing the number of teeth in the toothing of the ring gear (4) by the number of teeth in the toothing of the planetary gear (5) which meshes with the ring gear (4) and
the number obtained by dividing the number of teeth in the toothing of the planetary gear (5) which meshes with the respective gear (6) which at that moment is connected by the slider element (8) to the driven shaft (2) by the number of teeth in the toothing of said gear (6).

11. The epicyclic train according to claim 4, **characterised in that** the gear ratio is obtained by adding the number one to the number obtained by dividing on each occasion the two further numbers:
the number of teeth in the toothing of the ring gear (4) which by means of the planetary gear (5) is connected to the respective gear (6) which at that moment is connected by means of the slider element (8) to the driven shaft (2) and
the number of teeth in the toothing of said gear (6).

12. A bicycle, with an epicyclic train for transmitting power between two coaxial shafts, one being a driving shaft (1) and consisting of the pin joining the pedals, and the other being a driven shaft (2) and consisting of the idle shaft of the driving wheel, in such a way that the input speed transmitted by the driving shaft (1) is different to the output speed transmitted to the driven shaft (2), **characterised in that** the driven shaft (2) is hollow and the driving shaft (1) is inserted in it, there being supports (11) interposed between the two shafts and designed to allow their reciprocal rotation about the shared axis, and the epicyclic train comprising:
a pedal rod (3) to be rigidly connected to the driving shaft (1),
at least one ring gear (4), the inside of which comprises toothing and which is stationary relative to all of the other components of the epicyclic train,
a planetary gear (5), comprising two or more sets of toothing and using one of these sets of toothing to mesh with the ring gear (4), being rotatably connected to the rod (3) and subject to the action imposed on it by the latter during rotation of the driving shaft (1) so that it rolls without sliding on the toothing of the ring gear (4) in such a way that the tips of its toothing are forced to move along a respective epicycloid,
a plurality of gears (6), each on one side meshing with a respective toothing of the planetary gear (5) and on the other side designed to be rigidly connected to the driven shaft (2),
a slider element (8), interposed between the plurality of gears (6) and the driven shaft (2) and able to translate in the longitudinal direction of the driven shaft (2) between a plurality of positions, in each of which on each occasion it rigidly connects one of the gears (6) and the driven shaft (2) to each other,
each gear (6) comprising two sets of toothing, specifically first toothing designed to mesh with the planetary gear (5) and second toothing designed to be rigidly connected to the driven shaft (2), **characterised in that** the central connecting bodies of the gears (6) are on top of each other and they are rotatably supported one on top of another.

13. The bicycle according to claim 12, **characterised in that** the slider element (8) comprising toothing designed to mesh with each of the gears (6) and is supported on a sleeve (9) in turn integral with the driven shaft (2) in such a way that it rotates together with the sleeve (9) during rotation of the driven shaft (2), but at the same time can translate in the longitudinal direction of the driven shaft (2) between a plurality of positions.

14. The bicycle according to claim 13, **characterised in that** the movement of the slider element (8) is operated directly by the cyclist by means of at least one control clamp (14) of a bicycle gear shifter, engaging on the outer housing of a ball bearing (15), the inner housing being fixed to the slider element (8) and rotating together with it.

15. The bicycle according to claim 12, **characterised in that** the planetary gear (5) comprises a plurality of gear wheels which are rigidly connected to each other.

16. The bicycle according to claim 12, **characterised in that** it comprises a plurality of ring gears (4) and the planetary gear (5) comprises a plurality of gear wheels, all rotatably connected to the rod (3) and free to rotate relative to each other, the toothing of each meshing with the associated ring gear (4).

17. The bicycle according to claim 15, **characterised in that** the gear ratio is obtained by adding the number one to the number obtained by multiplying on each occasion the following two further numbers:
the number obtained by dividing the number of teeth in the toothing of the ring gear (4) by the number of teeth in the toothing of the planetary gear (5) which meshes with the ring gear (4) and
the number obtained by dividing the number of teeth in the toothing of the planetary gear (5) which meshes with the respective gear (6) which at that moment is connected by the slider element (8) to the driven shaft (2) by the number of teeth in the toothing of said gear (6).

18. The bicycle according to claim 16, **characterised in that** the gear ratio is obtained by adding the number one to the number obtained by dividing on each occasion the following two further numbers:
the number of teeth in the toothing of the ring gear (4) which by means of the planetary gear (5) is connected to the respective gear (6) which at that moment is connected by means of the slider element (8) to the driven shaft (2) and
the number of teeth in the toothing of said gear (6).

## Revendications

1. Engrenage épicycloïdal de transmission de puissance entre deux arbres coaxiaux, dont l'un est menant (1) et l'autre est mené (2), de sorte que la vitesse angulaire en entrée transmise par l'arbre menant (1) soit différente de la vitesse en sortie transmise par l'arbre mené (2), comprenant :
un élément de transmission (3) à raccorder étroitement à l'arbre menant (1),
au moins une couronne dentée (4), avec denture interne et fixée par rapport à tous les autres composants de l'engrenage épicycloïdal,
un engrenage satellite (5) présentant plusieurs dentures et engrenant avec l'une de ces dentures sur la denture de la couronne dentée (4), raccordé en rotation à l'élément de transmission (3) et qui, sous l'action exercée sur celui-ci par l'engrenage lors de la rotation de l'arbre menant (1), roule sans frotter sur la denture de la couronne dentée (4), pour laquelle les points de sa denture respective sont contraints à se déplacer le long d'une épicycloïde respective,
une série d'engrenages (6), dont chacun engrène d'un côté sur une denture respective de l'engrenage satellite (5) et de l'autre peut être raccordé étroitement à l'arbre mené (2),
un organe curseur (8), interposé entre la série d'engrenages (6) et l'arbre mené (2) et pouvant se déplacer le long de la direction longitudinale de l'arbre mené (2) sur plusieurs positions, à chacune desquelles il raccorde d'une fois à l'autre étroitement entre eux l'un des engrenages (6) et l'arbre mené (2) ;
chaque engrenage (6) présente deux dentures, notamment une première pouvant engrener sur l'engrenage satellite (5) et une deuxième pouvant être étroitement raccordée à l'arbre mené (2) **caractérisé par le fait que** les engrenages (6) sont superposés l'un sur l'autre par leurs propres corps centraux respectifs de raccord et sont supportés en rotation l'un sur l'autre.

2. Engrenage épicycloïdal selon la revendication 1, **caractérisé par le fait que** l'organe curseur (8) présente une denture pouvant engrener sur chacun des engrenages (6) et est ainsi soutenu par un manchon (9) lui-même solidaire à l'arbre mené (2), qui tourne avec le manchon (9) lors de la rotation de l'arbre mené (2), mais qui peut en même temps se déplacer le long de la direction longitudinale de l'axe mené (2) en plusieurs positions.

3. Engrenage épicycloïdal selon la revendication 1, **caractérisé par le fait que** l'engrenage satellite (5) est constitué d'une série de roues dentées étroitement associées entre elles.

4. Engrenage épicycloïdal selon la revendication 1, **caractérisé par le fait qu'**il comprend une série de couronnes dentées (4) et que l'engrenage satellite (5) présente une série de roues dentées, toutes raccordées en rotation à l'élément de transmission (3) et libres de tourner réciproquement entre elles, chacune d'entre elles engrène avec sa propre denture sur la denture de la couronne dentée (4) associée.

5. Engrenage épicycloïdal selon la revendication 3, **caractérisé par le fait que** l'élément de transmission (3) est destiné à être raccordé étroitement à l'arbre menant (1) sur son côté opposé à celui sur lequel celui-ci est raccordé en rotation à l'engrenage satellite (5), une fois que l'arbre menant (1) et l'arbre mené (2) se trouvant à ses parties opposées sont raccordés à l'engrenage épicycloïdal.

6. Engrenage épicycloïdal selon la revendication 3, **caractérisé par le fait que** l'élément de transmission (3) est destiné à être raccordé étroitement à l'arbre menant (1) sur son même côté que celui sur lequel celui-ci est raccordé en rotation à l'engrenage satellite (5), une fois que l'arbre menant (1) et l'arbre mené (2) se trouvant du même côté que lui et étant disposés de sorte que l'arbre mené (2) soit creux et l'arbre menant (1) soit inséré entre celui-ci et entre deux arbres étant des supports (11) interposés pouvant en permettre la rotation réciproque autour de l'axe commun, sont raccordés à l'engrenage épicycloïdal.

7. Engrenage épicycloïdal selon la revendication 5, **caractérisé par le fait que** l'élément de transmission (3) est un disque qui présente des saillies ou des encoches pour compenser d'éventuelles vibrations des autres composants tournants de l'engrenage épicycloïdal.

8. Engrenage épicycloïdal selon la revendication 5, **caractérisé par le fait que** l'élément de transmission (3) est la tige d'une manivelle.

9. Engrenage épicycloïdal selon la revendication 5, **caractérisé par le fait que** l'élément de transmission (3) est la tige d'une pédale.

10. Engrenage épicycloïdal selon la revendication 3, **caractérisé par le fait que** le rapport de transmission s'obtient par somme du nombre un au nombre obtenu en multipliant d'une fois à l'autre les autres nombres ci-après :
le nombre obtenu en divisant le nombre de dents de la denture de la couronne dentée (4) par le nombre de dents de la denture de l'engrenage satellite (5) qui engrène sur la couronne dentée (4) et
le nombre obtenu en divisant le nombre de dents de la denture de l'engrenage satellite (5) qui engrène sur l'engrenage respectif (6) qui est à ce moment-là raccordé par le biais de l'organe curseur (8) à l'axe mené (2), par le nombre de dents de la denture de cet engrenage (6).

11. Engrenage épicycloïdal selon la revendication 4, **caractérisé par le fait que** le rapport de transmission s'obtient par somme du nombre un au nombre obtenu en divisant d'une fois à l'autre les autres nombres ci-après :
le nombre de dents de la denture de la couronne dentée (4) qui, par le biais de l'engrenage satellite (5), est raccordée à l'engrenage respectif (6) qui est à ce moment-là raccordé par l'organe curseur (8) à l'arbre mené (2) et
le nombre de dents de la denture de cet engrenage (6).

12. Bicyclette avec un engrenage épicycloïdal de transmission de puissance entre deux arbres coaxiaux, dont l'un est menant (1) et est constitué par l'axe qui relie les pédales, et l'autre est mené (2) et est constitué par l'axe libre de la roue motrice, de sorte que la vitesse angulaire en entrée transmise par l'arbre menant (1) soit différente de la vitesse en sortie transmise par l'arbre mené (2), **caractérisée par le fait que** l'arbre mené (2) est creux et l'arbre menant (1) est inséré dans celui-ci, des supports (11) étant interposés entre les deux arbres et pouvant en permettre la rotation réciproque autour de l'axe commun, et que l'engrenage épicycloïdal comprend :
une tige de pédale (3) à raccorder étroitement à l'arbre menant (1),
au moins une couronne dentée (4), avec une denture interne et fixée par rapport à tous les autres composants de l'engrenage épicycloïdal,
un engrenage satellite (5) présentant plusieurs dentures et engrenant avec l'une de ces dentures sur la couronne dentée (4), raccordé en rotation à la tige (3) et qui, sous l'action exercée sur celui-ci par la tige lors de la rotation de l'arbre menant (1), roule sans frotter sur la denture de la couronne dentée (4),
pour laquelle les points de sa denture sont contraints à se déplacer le long d'une épicycloïde respective,
une série d'engrenages (6), dont chacun engrène d'un côté sur une denture respective de l'engrenage satellite (5) et de l'autre peut être raccordé étroitement à l'arbre mené (2),
un organe curseur (8), interposé entre la série d'engrenages (6) et l'arbre mené (2) et pouvant se déplacer le long de la direction longitudinale de l'arbre mené (2) sur plusieurs positions, à chacune desquelles il raccorde d'une fois à l'autre étroitement entre eux l'un des engrenages (6) et l'arbre mené (2),
chaque engrenage (6) présente deux dentures, notamment une première pouvant engrener sur l'engrenage satellite (5) et une deuxième pouvant être étroitement raccordée à l'arbre mené (2) **caractérisé par le fait que** les engrenages (6) sont superposés l'un sur l'autre par leurs propres corps centraux respectifs de raccord et sont supportés en rotation l'un sur l'autre.

13. Bicyclette selon la revendication 12, **caractérisée par le fait que** l'organe curseur (8) présente une denture pouvant engrener sur chacun des engrenages (6) et est ainsi soutenu par un manchon (9) lui-même solidaire à l'arbre mené (2), qui tourne avec le manchon (9) lors de la rotation de l'arbre mené (2), mais qui peut en même temps se déplacer le long de la direction longitudinale de l'axe mené (2) en plusieurs positions.

14. Bicyclette selon la revendication 13, **caractérisée par le fait que** le déplacement de l'organe curseur (8) est directement actionné par le cycliste par le biais d'une pincette opérationnelle (14) d'un dérailleur pour bicyclettes, qui s'engage sur le logement externe d'un roulement à billes (15), dont le logement interne est fixé à l'organe curseur (8) et tourne avec lui.

15. Bicyclette selon la revendication 12, **caractérisée par le fait que** l'engrenage satellite (5) est constitué d'une série de roues dentées étroitement associées entre elles.

16. Bicyclette selon la revendication 12, **caractérisée par le fait qu'**elle comprend une série de roues dentées (4) et que l'engrenage satellite (5) présente une série de roues dentées, toutes raccordées en rotation à la tige (3) et libres de tourner réciproquement entre elles, chacune d'entre elles engrène avec sa propre denture sur la denture de la couronne dentée (4) associée.

17. Bicyclette selon la revendication 15, **caractérisée par le fait que** le rapport de transmission s'obtient par somme du nombre un au nombre obtenu en multipliant d'une fois à l'autre les autres nombres ci-après :
le nombre obtenu en divisant le nombre de dents de la denture de la couronne dentée (4) par le nombre de dents de la denture de l'engrenage satellite (5) qui engrène sur la couronne dentée (4) et
le nombre obtenu en divisant le nombre de dents de la denture de l'engrenage satellite (5) qui engrène sur l'engrenage respectif (6) qui est à ce moment-là raccordé par l'organe curseur (8) à l'arbre mené (2), par le nombre de dents de la denture de cet engrenage (6).

18. Bicyclette selon la revendication 16, **caractérisée par le fait que** le rapport de transmission s'obtient par somme du nombre un au nombre obtenu en divisant d'une fois à l'autre les autres nombres ci-après :
le nombre de dents de la denture de la couronne dentée (4) qui, par le biais de l'engrenage satellite (5) est raccordée à l'engrenage respectif (6) qui est à ce moment-là raccordé par l'organe curseur (8) à l'axe mené (2) et le nombre de dents de la denture de cet engrenage (6).
